# EUROPEAN PATENT APPLICATION

(11) **EP 4 806 959 A1**
(43) Date of publication of application: **16.09.2026**
(21) Application number: 26158024.5
(22) Date of filing: 12.02.2026
(51) Int. Cl.: C09D 5/26, C09D 7/20, C09D 7/61

(54) **THERMOCHROMIC PAINT**

(30) Priority: 12.03.2025 GB 202503627
(71) Applicant: Rolls-Royce plc, London N1 9FX (GB)
(72) Inventor: KITAGAWA, Akiharu, Derby, DE24 8BJ (GB); WAIN, Samuel, Derby, DE24 8BJ (GB); MACKILLIGIN, Harry, Derby, DE24 8BJ (GB)
(74) Representative: Rolls-Royce plc

(57) **Abstract**

A thermochromic paint (100) for a component (50). The thermochromic paint comprises: 20 to 40 wt.% of two of more metal oxides selected from aluminium oxide, cobalt oxide, iron oxide, nickel oxide, titanium oxide, and zirconium oxide; 10 to 40 wt.% of an acrylic resin, 5 to 30 wt.% a silicone resin; and 15 to 40 wt.% of a propanol-based solvent.

## Description

### FIELD

This disclosure relates to a thermochromic paint for a component e.g. gas turbine engine component, a method for preparing a thermochromic paint for a component, and a component at least partially coated with the thermochromic paint.

### BACKGROUND

Components of various machines are typically coated to protect them during use, e.g. to minimise wear and generally improve their safe and useful life. Gas turbine engine components, particularly those located in gas paths of such engines, are required to withstand extreme temperatures for prolonged periods of time, therefore maintaining their integrity is critical to the safety and efficiency of the engines. Such components are typically coated with an engineering coating such as a thermal barrier coating (TBC) or an environmental barrier coating (EBC). To understand the surface temperature profile of these components in the harsh engine environment, Rolls-Royce uses thermochromic paints, which provides thermal information in a form of colour changes.

Thermochromic paints are irreversibly thermochromic as they change colour in response to temperature and the colour changes are permanent. This property can be useful when inspecting painted components located within machines, particularly complex machines such as gas turbine engines in which certain components are exposed to very high and/or very low temperatures. Due to their unique properties, temperature measurement by the use of thermochromic paints is especially advantageous when designing new engine components, i.e. by helping to understand the surface temperature distribution in situ.

The conventional method of measuring the temperature using thermochromic paints involves disassembling of the machine and analysing the parts one by one. Although this approach provides detailed temperature measurement results for development engines, it requires extensive time and cost. To carry out surface temperature measurement by thermochromic paints without disassembling parts of the machine at great cost and inconvenience, borescopes can be used to reach the components located deep within the engines.

Such borescopes might include a camera and a light source to inspect components of interest, capturing the colour changes of thermochromic paints in a dark environment. However, many existing thermochromic paints are unsuitable for this borescope approach mainly due to a significant interaction of the paints and the substrate coating, which negatively impacts the life and performance of the coatings, e.g. thermal barrier coatings (TBCs) and environmental barrier coatings (EBCs).

Although thermochromic paints are only used in the development engines, when thermochromic paints are analysed via the borescope approach, the use of any thermochromic paint must not compromise the accuracy and integrity of the data gathered from an engine test. This is because the same test engine may proceed with other tests such as sand ingestion test and exhaust tests to maximise learning per engine.

There is therefore a need for a thermochromic paint that addresses the aforementioned concerns or at least provides a useful alternative to known thermochromic paints.

### SUMMARY

In a first aspect, there is provided a thermochromic paint for a component, the thermochromic paint comprises: 20 to 40 wt.% of two or more metal oxides selected from aluminium oxide, cobalt oxide, iron oxide, nickel oxide, titanium oxide, and zirconium oxide; 10 to 40 wt.% of an acrylic resin; 5 to 30 wt.% a silicone resin; and 15 to 40 wt.% of a propanol-based solvent.

In some embodiments, the thermochromic paint comprises: 20 to 35 wt.% of two or more metal oxides selected from aluminium oxide, cobalt oxide, iron oxide, nickel oxide, titanium oxide, and zirconium oxide; 25 to 35 wt.% of an acrylic resin; 8 to 25 wt.% of a silicone resin; and 20 to 40 wt.% of a propanol-based solvent.

In some embodiments, the thermochromic paint comprises: 22 to 32 wt.% of two or more metal oxides selected from aluminium oxide, cobalt oxide, iron oxide, nickel oxide, titanium oxide, and zirconium oxide; 20 to 30 wt.% of an acrylic resin; 10 to 20 wt.% of a silicone resin; and 25 to 35 wt.% of a propanol-based solvent.

In some embodiments, the thermochromic paint comprises: 24 to 31 wt.% of two or more metal oxides selected from aluminium oxide, cobalt oxide, iron oxide, nickel oxide, titanium oxide, and zirconium oxide; 23 to 26 wt.% of an acrylic resin; 14 to 16 wt.% of a silicone resin; and 28 to 34 wt.% of a propanol-based solvent.

In some embodiments, the thermochromic paint consists of: 20 to 40 wt.% of two or more metal oxides selected from aluminium oxide, cobalt oxide, iron oxide, nickel oxide, titanium oxide, and zirconium oxide; 10 to 40 wt.% of an acrylic resin; 5 to 30 wt.% a silicone resin; and 15 to 40 wt.% of a propanol-based solvent.

In some embodiments, the thermochromic paint consists of: 20 to 35 wt.% of two or more metal oxides selected from aluminium oxide, cobalt oxide, iron oxide, nickel oxide, titanium oxide, and zirconium oxide; 25 to 35 wt.% of an acrylic resin; 8 to 25 wt.% of a silicone resin; and 20 to 40 wt.% of a propanol-based solvent.

In some embodiments, the thermochromic paint consists of: 22 to 32 wt.% of two or more metal oxides selected from aluminium oxide, cobalt oxide, iron oxide, nickel oxide, titanium oxide, and zirconium oxide; 20 to 30 wt.% of an acrylic resin; 10 to 20 wt.% of a silicone resin; and 25 to 35 wt.% of a propanol-based solvent.

In some embodiments, the thermochromic paint consists of: 24 to 31 wt.% of two or more metal oxides selected from aluminium oxide, cobalt oxide, iron oxide, nickel oxide, titanium oxide, and zirconium oxide; 23 to 26 wt.% of an acrylic resin; 14 to 16 wt.% of a silicone resin; and 28 to 34 wt.% of a propanol-based solvent.

In some embodiments, the thermochromic paint comprises: 20 to 40 wt.% of three or more metal oxides selected from aluminium oxide, cobalt oxide, iron oxide, nickel oxide, titanium oxide, and zirconium oxide; 10 to 40 wt.% of an acrylic resin; 5 to 30 wt.% a silicone resin; and 15 to 40 wt.% of a propanol-based solvent.

In some embodiments, the thermochromic paint comprises: 20 to 35 wt.% of three or more metal oxides selected from aluminium oxide, cobalt oxide, iron oxide, nickel oxide, titanium oxide, and zirconium oxide; 25 to 35 wt.% of an acrylic resin; 8 to 25 wt.% of a silicone resin; and 20 to 40 wt.% of a propanol-based solvent.

In some embodiments, the thermochromic paint comprises: 22 to 32 wt.% of three or more metal oxides selected from aluminium oxide, cobalt oxide, iron oxide, nickel oxide, titanium oxide, and zirconium oxide; 20 to 30 wt.% of an acrylic resin; 10 to 20 wt.% of a silicone resin; and 25 to 35 wt.% of a propanol-based solvent.

In some embodiments, the thermochromic paint comprises: 24 to 31 wt.% of three or more metal oxides selected from aluminium oxide, cobalt oxide, iron oxide, nickel oxide, titanium oxide, and zirconium oxide; 23 to 26 wt.% of an acrylic resin; 14 to 16 wt.% of a silicone resin; and 28 to 34 wt.% of a propanol-based solvent.

In some embodiments, the thermochromic paint consists of: 20 to 40 wt.% of three or more metal oxides selected from aluminium oxide, cobalt oxide, iron oxide, nickel oxide, titanium oxide, and zirconium oxide; 10 to 40 wt.% of an acrylic resin; 5 to 30 wt.% a silicone resin; and 15 to 40 wt.% of a propanol-based solvent.

In some embodiments, the thermochromic paint consists of: 20 to 35 wt.% of three or more metal oxides selected from aluminium oxide, cobalt oxide, iron oxide, nickel oxide, titanium oxide, and zirconium oxide; 25 to 35 wt.% of an acrylic resin; 8 to 25 wt.% of a silicone resin; and 20 to 40 wt.% of a propanol-based solvent.

In some embodiments, the thermochromic paint consists of: 22 to 32 wt.% of three or more metal oxides selected from aluminium oxide, cobalt oxide, iron oxide, nickel oxide, titanium oxide, and zirconium oxide; 20 to 30 wt.% of an acrylic resin; 10 to 20 wt.% of a silicone resin; and 25 to 35 wt.% of a propanol-based solvent.

In some embodiments, the thermochromic paint consists of: 24 to 31 wt.% of three or more metal oxides selected from aluminium oxide, cobalt oxide, iron oxide, nickel oxide, titanium oxide, and zirconium oxide; 23 to 26 wt.% of an acrylic resin; 14 to 16 wt.% of a silicone resin; and 28 to 34 wt.% of a propanol-based solvent.

In some embodiments, the thermochromic paint comprises: 20 to 40 wt.% of three or four metal oxides selected from aluminium oxide, cobalt oxide, iron oxide, nickel oxide, titanium oxide, and zirconium oxide; 10 to 40 wt.% of an acrylic resin; 5 to 30 wt.% a silicone resin; and 15 to 40 wt.% of a propanol-based solvent.

In some embodiments, the thermochromic paint comprises: 20 to 35 wt.% of three or four metal oxides selected from aluminium oxide, cobalt oxide, iron oxide, nickel oxide, titanium oxide, and zirconium oxide; 25 to 35 wt.% of an acrylic resin; 8 to 25 wt.% of a silicone resin; and 20 to 40 wt.% of a propanol-based solvent.

In some embodiments, the thermochromic paint comprises: 22 to 32 wt.% of three or four metal oxides selected from aluminium oxide, cobalt oxide, iron oxide, nickel oxide, titanium oxide, and zirconium oxide; 20 to 30 wt.% of an acrylic resin; 10 to 20 wt.% of a silicone resin; and 25 to 35 wt.% of a propanol-based solvent.

In some embodiments, the thermochromic paint comprises: 24 to 31 wt.% of three or four metal oxides selected from aluminium oxide, cobalt oxide, iron oxide, nickel oxide, titanium oxide, and zirconium oxide; 23 to 26 wt.% of an acrylic resin; 14 to 16 wt.% of a silicone resin; and 28 to 34 wt.% of a propanol-based solvent.

In some embodiments, the thermochromic paint consists of: 20 to 40 wt.% of three or four metal oxides selected from aluminium oxide, cobalt oxide, iron oxide, nickel oxide, titanium oxide, and zirconium oxide; 10 to 40 wt.% of an acrylic resin; 5 to 30 wt.% a silicone resin; and 15 to 40 wt.% of a propanol-based solvent.

In some embodiments, the thermochromic paint consists of: 20 to 35 wt.% of three or four metal oxides selected from aluminium oxide, cobalt oxide, iron oxide, nickel oxide, titanium oxide, and zirconium oxide; 25 to 35 wt.% of an acrylic resin; 8 to 25 wt.% of a silicone resin; and 20 to 40 wt.% of a propanol-based solvent.

In some embodiments, the thermochromic paint consists of: 22 to 32 wt.% of three or four metal oxides selected from aluminium oxide, cobalt oxide, iron oxide, nickel oxide, titanium oxide, and zirconium oxide; 20 to 30 wt.% of an acrylic resin; 10 to 20 wt.% of a silicone resin; and 25 to 35 wt.% of a propanol-based solvent.

In some embodiments, the thermochromic paint consists of: 24 to 31 wt.% of three or four metal oxides selected from aluminium oxide, cobalt oxide, iron oxide, nickel oxide, titanium oxide, and zirconium oxide; 23 to 26 wt.% of an acrylic resin; 14 to 16 wt.% of a silicone resin; and 28 to 34 wt.% of a propanol-based solvent.

In some embodiments, the thermochromic paint comprises: 22.5 wt.% of aluminium oxide, 5.1 wt.% of nickel oxide, 2.4 wt.% of titanium oxide, 25.2 wt.% of an acrylic resin, 15.3 wt.% of a silicone resin, and 29.5 wt.% of a propanol-based solvent; 13.1 wt.% of zirconium oxide, 3.3 wt.% of nickel oxide, 3.3 wt.% of cobalt oxide, 6.5 wt.% of aluminium oxide, 25.4 wt.% of an acrylic resin, 15.0 wt.% of a silicone resin, and 33.4 wt.% of a propanol-based solvent; 10.8 wt.% of zirconium oxide, 5.4 wt.% of nickel oxide, 13.6 wt.% of aluminium oxide, 0.6 wt.% of titanium oxide, 25.3 wt.% of an acrylic resin, 15.6 wt.% of a silicone resin, and 28.7 wt.% of a propanol-based solvent; or 2.4 wt.% of zinc oxide, 1.3 wt.% of yellow iron oxide, 26.0 wt.% of titanium oxide, 24.9 wt.% of an acrylic resin, 15.4 wt.% of a silicone resin, and 30.0 wt.% of a propanol-based solvent.

In some embodiments, the thermochromic paint consists of: 22.5 wt.% of aluminium oxide, 5.1 wt.% of nickel oxide, 2.4 wt.% of titanium oxide, 25.2 wt.% of an acrylic resin, 15.3 wt.% of a silicone resin, and 29.5 wt.% of a propanol-based solvent; 13.1 wt.% of zirconium oxide, 3.3 wt.% of nickel oxide, 3.3 wt.% of cobalt oxide, 6.5 wt.% of aluminium oxide, 25.4 wt.% of an acrylic resin, 15.0 wt.% of a silicone resin, and 33.4 wt.% of a propanol-based solvent; 10.8 wt.% of zirconium oxide, 5.4 wt.% of nickel oxide, 13.6 wt.% of aluminium oxide, 0.6 wt.% of titanium oxide, 25.3 wt.% of an acrylic resin, 15.6 wt.% of a silicone resin, and 28.7 wt.% of a propanol-based solvent; or 2.4 wt.% of zinc oxide, 1.3 wt.% of yellow iron oxide, 26.0 wt.% of titanium oxide, 24.9 wt.% of an acrylic resin, 15.4 wt.% of a silicone resin, and 30.0 wt.% of a propanol-based solvent.

In some embodiments, the acrylic resin is an ethylbenzene and xylene-based acrylic resin.

In some embodiments, the silicone resin is a silanol-functional silicone resin.

In some embodiments, the propanol-based solvent is propanol or a mixture that comprises propanol and an ether.

In some embodiments, the component is a gas turbine engine component (e.g. a nozzle guide vane, a turbine blade, a heatshield, a seal segment, a liner, or a disc).

In a second aspect, there is provided a method for preparing a thermochromic paint for a component, the method comprises mixing the following constituents: 20 to 40 wt.% of two or more metal oxides selected from aluminium oxide, cobalt oxide, iron oxide, nickel oxide, titanium oxide, and zirconium oxide; 10 to 40 wt.% of an acrylic resin; 5 to 30 wt.% of a silicone resin; and 15 to 45 wt.% of a propanol-based solvent.

In some embodiments, the method comprises mixing: 20 to 40 wt.% of three or more metal oxides selected from aluminium oxide, cobalt oxide, iron oxide, nickel oxide, titanium oxide, and zirconium oxide; 10 to 40 wt.% of an acrylic resin; 5 to 30 wt.% of a silicone resin; and 15 to 45 wt.% of a propanol-based solvent.

In some embodiments, the method comprises mixing: 20 to 40 wt.% of three or four metal oxides selected from aluminium oxide, cobalt oxide, iron oxide, nickel oxide, titanium oxide, and zirconium oxide; 10 to 40 wt.% of an acrylic resin; 5 to 30 wt.% of a silicone resin; and 15 to 45 wt.% of a propanol-based solvent.

In some embodiments, the constituents are mixed in a basket mill; the mixture of paint constituents is dispersed in a disperser; and the dispersed mixture of paint constituents is milled with ceramic beads to form the thermochromic paint.

In a third aspect, there is provided a component that is at least partially coated with a thermochromic paint of the first aspect.

In some embodiments, the component is a gas turbine engine component (e.g. a nozzle guide vane, a turbine blade, a heatshield, a seal segment, a liner, or a disc).

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

The term "borescope" as used herein means a tool that used to inspect the inside of a structure through a small hole. A borescope may be used to the inspect an internal space within a machine, e.g. a gas turbine engine, by inserting the borescope through a hole or port that is formed in a casing of the machine. Borescopes typically include inspection equipment such as cameras or other sensors.

The term "calcia-magnesia-alumino silicate" or "CMAS" as used herein means molten siliceous residue generated at elevated temperatures within aeroengines due to ingestion of debris, e.g. sand and volcanic ash, with the intake air. CMAS adheres to the surface of thermal barrier coatings (TBCs) and has the potential to cause significant damage to engine components, resulting in TBC failures. The aviation industry has long recognized CMAS as a substantial threat to aircraft engines.

The term "engineering coating" as used herein means a coating that alters the surface properties of the substrate to which it is applied. It may be a thermal barrier coating (TBC) i.e. a thermally insulating material that is applied to a substrate that is typically exposed to elevated temperatures, or an environmental barrier coating (EBC) i.e. a barrier coating that is applied to a substrate that is typically exposed to environmental stresses such as icing and erosion.

The term "environmental barrier coating" or "EBC" as used herein is a barrier coating that is applied to a substrate that is typically exposed to environmental stresses such as icing and erosion. Environmental barrier coatings are typically applied to gas turbine engine components to increase their service life. They tend to be stabilized ceramics that can sustain a fairly high temperature gradient. They are often used to prevent water vapour degradation of gas turbine engine components that are made from SiC-SiC ceramic matric composite materials (CMCs).

The term "thermal barrier coating" or "TBC" as used herein is a barrier coating that is applied to a substrate that is typically exposed to elevated temperatures. Such coatings can allow for higher operating temperatures while limiting the thermal exposure of structural components, extending component life by reducing oxidation and thermal fatigue.

The term "thermochromic paint" (aka temperature indicating paint or thermal paint) as used herein is a coating material that changes colour in response to temperature. The change may be immediate or gradual, depending on the chemical composition of the paint, which typically includes one or more thermochromic pigments. In this way a thermochromic paint can function as a temperature gauge or heatmap. Thermochromic paints are applied to the surface of the parts of machines such as engines and rigs, to measure temperature experienced by the component surface. Temperature measurement is achieved by analysing the irreversible colour change of the paint with respect temperature and time. Thermochromic paints are manufactured, applied, calibrated, and analysed in-house at Rolls-Royce Plc in Derby, UK.

The term "thermochromic paint composition" as used herein means a composition from which a thermochromic paint can be prepared or formulated.

The term "aluminium oxide" as used herein means alumina, i.e. Al₂O₃.

The term "cobalt oxide" as used herein means cobalt (II) oxide, i.e. CoO.

The term "iron oxide" as used herein means iron (III) oxide, i.e. Fe₂O₃.

The term "nickel oxide" as used herein means nickel (II) oxide, i.e. NiO.

The term "titanium oxide" as used herein means titanium dioxide, i.e. TiO₂.

The term "zirconium oxide" as used herein means zirconium dioxide, i.e. ZrO₂.

The term "propanol-based solvent" is a solvent that consists of or comprises propanol or a substituted propanol, e.g. methoxy propanol or methoxy propoxy propanol. In some embodiments, the propanol-based solvent may be propanol (and/or a substituted propanol) and an ether, e.g. dipropylene glycol monomethyl ether.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only with reference to the accompanying drawings, in which:
**FIG. 1** schematically represents a sectional side view of a gas turbine engine;
**FIG. 2** schematically represents a component of the gas turbine engine of FIG. 1, i.e. a high pressure nozzle guide vane that is partially coated with a thermochromic paint of the present disclosure;

The following table lists the reference numerals used in the drawings with the features to which they refer:

| Ref no. | Feature | FIG. |
|---|---|---|
| A | Core air flow | 1 |
| B | Bypass air flow | 1 |
| 9 | Principal rotational axis (of engine) | 1 |
| 10 | Gas turbine engine | 1 |
| 11 | Engine core | 1 |
| 12 | Air intake | 1 |
| 14 | Low pressure compressor (LPC) | 1 |
| 15 | High pressure compressor (HPC) | 1 |
| 16 | Combustion equipment | 1 |
| 17 | High pressure turbine (HPT) | 1 |
| 18 | Bypass exhaust nozzle | 1 |
| 19 | Low pressure turbine (LPT) | 1 |
| 20 | Core exhaust nozzle | 1 |
| 21 | Nacelle | 1 |
| 22 | Bypass duct | 1 |
| 23 | Fan | 1 |
| 26 | Shaft | 1 |
| 27 | Shaft | 1 |
| 30 | Epicyclic gearbox | 1 |
| 50 | Component | 2 |
| 100 | Thermochromic paint | 2 |

### DETAILED DESCRIPTION

Aspects and embodiments of the present disclosure will now be discussed with reference to the accompanying figures. Further aspects and embodiments will be apparent to those skilled in the art.

In a first aspect the present disclosure provides a thermochromic paint for a component. The component is a part or a machine and can take various forms. The component may be a gas turbine engine component, e.g. a gas turbine aircraft engine component including, but not limited to, nozzle guide vanes, turbine blades, heatshields, seal segments, liner, and discs.

As mentioned above, thermochromic paints can be usefully employed when designing components, as part of the engine development programme for gas turbine engines. Thermal paint engine testing is carried out to obtain the experimental surface temperature distribution of gas turbine engine components. Although this is a crucial step in engine development programme, it is a costly and time-consuming process for each test component.

Thermochromic paints of the present disclosure may be described as being "borescope-friendly" in the sense that they show observable colour transitions in low light or even dark environments that are encountered during borescope inspections and they may be described as being "engineering coating-friendly" in the sense that they do not interact with or damage any engineering coatings that have already been applied to the component.

To illustrate the thermochromic paint of the present disclosure, their preparation and use will be described in connection with the coating of gas turbine engine components.

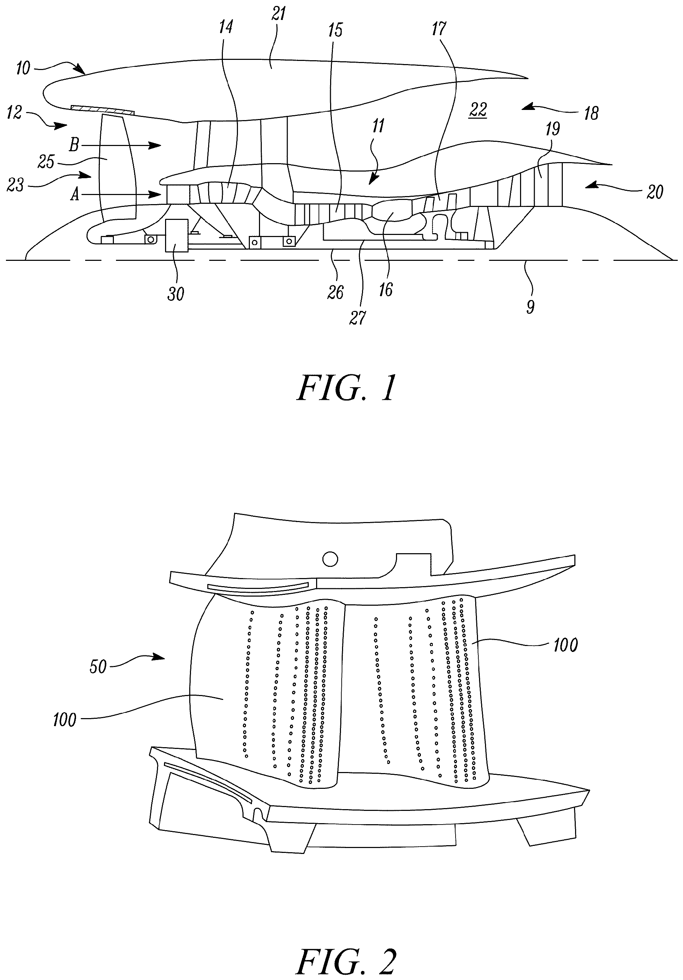

**FIG. 1** illustrates a gas turbine engine 10 having a principal rotational axis 9. The engine 10 comprises an air intake 12 which receives air and a propulsive fan 23 generates two airflows: a core airflow A and a bypass airflow B. Air intake airflow comprises the sum total of the air flowing into the operational upstream end of the engine 10, with the sum total of the core airflow A and the bypass airflow B substantially equal to the intake airflow.

The gas turbine engine 10 comprises a core 11 that receives the core airflow A. The engine core 11 comprises, in axial flow series, a low-pressure compressor 14, a high-pressure compressor 15, combustion equipment 16, a high-pressure turbine 17, a low-pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low-pressure turbine 19 via a shaft 26 and an epicyclic gearbox 30.

In use, the core airflow A is accelerated and compressed by the low-pressure compressor 14 and directed into the high-pressure compressor 15 where further compression takes place. The compressed air exhausted from the high-pressure compressor 15 is directed into the combustion equipment 16 where it is mixed with fuel and the mixture is combusted. The resultant hot combustion products then expand through, and thereby drive, the high-pressure and low-pressure turbines 17, 19, respectively, before being exhausted through the nozzle 20 to provide some propulsive thrust. The high-pressure turbine 17 drives the high-pressure compressor 15 by a suitable interconnecting shaft 27. The fan 23 generally provides the majority of the propulsive thrust. The epicyclic gearbox 30 is a reduction gearbox.

Various components in such a gas turbine engine are required to withstand extreme temperatures for prolonged periods of time. The safety of the passengers and crew who fly in aircraft powered these gas turbine engines depends on this.

**FIG. 2** shows one such component 50 in the form of a high-pressure nozzle guide vane and a high-pressure turbine blade.

Components such as the high-pressure nozzle guide vane shown in FIG. 2 may have different ceramic top coatings applied to different parts of the components to satisfy the demands of their intended use. For example, one ceramic top coating may be applied to the aerofoils of the nozzle guide vane of FIG. 2 and another ceramic top coating may be applied to the platforms of the nozzle guide vane of FIG. 2. More particularly, the aerofoils of the nozzle guide vane have a ceramic top coating that is formed by electron-beam physical vapour deposition (EB-PVD) and the platforms of the nozzle guide vane have a ceramic top coating that is formed by atmospheric plasma spraying (APS). The thermochromic paint of the present disclosure has been carefully formulated so it does not damage the ceramic coatings that have been provided on the component to protect it on use. In FIG. 2 the thermochromic paint 100 has been applied to the aerofoils of the component 50.

In broad terms, the thermochromic paint of the present disclosure comprises: 20 to 40 wt.% of two or more metal oxides selected from aluminium oxide, cobalt oxide, iron oxide, nickel oxide, titanium oxide, and zirconium oxide; 10 to 40 wt.% of an acrylic resin; 5 to 30 wt.% a silicone resin; and 15 to 40 wt.% of a propanol-based solvent.

The metal oxides may be ceramic-based solid constituents.

In some embodiments, the thermochromic paint comprises: 20 to 35 wt.% of two or more metal oxides selected from aluminium oxide, cobalt oxide, iron oxide, nickel oxide, titanium oxide, and zirconium oxide; 25 to 35 wt.% of an acrylic resin; 8 to 25 wt.% of a silicone resin; and 20 to 40 wt.% of a propanol-based solvent.

In some embodiments, the thermochromic paint comprises: 22 to 32 wt.% of two or more metal oxides selected from aluminium oxide, cobalt oxide, iron oxide, nickel oxide, titanium oxide, and zirconium oxide; 20 to 30 wt.% of an acrylic resin; 10 to 20 wt.% of a silicone resin; and 25 to 35 wt.% of a propanol-based solvent.

In some embodiments, the thermochromic paint comprises: 24 to 31 wt.% of two or more metal oxides selected from aluminium oxide, cobalt oxide, iron oxide, nickel oxide, titanium oxide, and zirconium oxide; 23 to 26 wt.% of an acrylic resin; 14 to 16 wt.% of a silicone resin; and 28 to 34 wt.% of a propanol-based solvent.

In some embodiments, the thermochromic paint consists of: 20 to 40 wt.% of two or more metal oxides selected from aluminium oxide, cobalt oxide, iron oxide, nickel oxide, titanium oxide, and zirconium oxide; 10 to 40 wt.% of an acrylic resin; 5 to 30 wt.% a silicone resin; and 15 to 40 wt.% of a propanol-based solvent.

In some embodiments, the thermochromic paint consists of: 20 to 35 wt.% of two or more metal oxides selected from aluminium oxide, cobalt oxide, iron oxide, nickel oxide, titanium oxide, and zirconium oxide; 25 to 35 wt.% of an acrylic resin; 8 to 25 wt.% of a silicone resin; and 20 to 40 wt.% of a propanol-based solvent.

In some embodiments, the thermochromic paint consists of: 22 to 32 wt.% of two or more metal oxides selected from aluminium oxide, cobalt oxide, iron oxide, nickel oxide, titanium oxide, and zirconium oxide; 20 to 30 wt.% of an acrylic resin; 10 to 20 wt.% of a silicone resin; and 25 to 35 wt.% of a propanol-based solvent.

In some embodiments, the thermochromic paint consists of: 24 to 31 wt.% of two or more metal oxides selected from aluminium oxide, cobalt oxide, iron oxide, nickel oxide, titanium oxide, and zirconium oxide; 23 to 26 wt.% of an acrylic resin; 14 to 16 wt.% of a silicone resin; and 28 to 34 wt.% of a propanol-based solvent.

In some embodiments, the thermochromic paint comprises: 20 to 40 wt.% of three or more metal oxides selected from aluminium oxide, cobalt oxide, iron oxide, nickel oxide, titanium oxide, and zirconium oxide; 10 to 40 wt.% of an acrylic resin; 5 to 30 wt.% a silicone resin; and 15 to 40 wt.% of a propanol-based solvent.

In some embodiments, the thermochromic paint comprises: 20 to 35 wt.% of three or more metal oxides selected from aluminium oxide, cobalt oxide, iron oxide, nickel oxide, titanium oxide, and zirconium oxide; 25 to 35 wt.% of an acrylic resin; 8 to 25 wt.% of a silicone resin; and 20 to 40 wt.% of a propanol-based solvent.

In some embodiments, the thermochromic paint comprises: 22 to 32 wt.% of three or more metal oxides selected from aluminium oxide, cobalt oxide, iron oxide, nickel oxide, titanium oxide, and zirconium oxide; 20 to 30 wt.% of an acrylic resin; 10 to 20 wt.% of a silicone resin; and 25 to 35 wt.% of a propanol-based solvent.

In some embodiments, the thermochromic paint comprises: 24 to 31 wt.% of three or more metal oxides selected from aluminium oxide, cobalt oxide, iron oxide, nickel oxide, titanium oxide, and zirconium oxide; 23 to 26 wt.% of an acrylic resin; 14 to 16 wt.% of a silicone resin; and 28 to 34 wt.% of a propanol-based solvent.

In some embodiments, the thermochromic paint consists of: 20 to 40 wt.% of three or more metal oxides selected from aluminium oxide, cobalt oxide, iron oxide, nickel oxide, titanium oxide, and zirconium oxide; 10 to 40 wt.% of an acrylic resin; 5 to 30 wt.% a silicone resin; and 15 to 40 wt.% of a propanol-based solvent.

In some embodiments, the thermochromic paint consists of: 20 to 35 wt.% of three or more metal oxides selected from aluminium oxide, cobalt oxide, iron oxide, nickel oxide, titanium oxide, and zirconium oxide; 25 to 35 wt.% of an acrylic resin; 8 to 25 wt.% of a silicone resin; and 20 to 40 wt.% of a propanol-based solvent.

In some embodiments, the thermochromic paint consists of: 22 to 32 wt.% of three or more metal oxides selected from aluminium oxide, cobalt oxide, iron oxide, nickel oxide, titanium oxide, and zirconium oxide; 20 to 30 wt.% of an acrylic resin; 10 to 20 wt.% of a silicone resin; and 25 to 35 wt.% of a propanol-based solvent.

In some embodiments, the thermochromic paint consists of: 24 to 31 wt.% of three or more metal oxides selected from aluminium oxide, cobalt oxide, iron oxide, nickel oxide, titanium oxide, and zirconium oxide; 23 to 26 wt.% of an acrylic resin; 14 to 16 wt.% of a silicone resin; and 28 to 34 wt.% of a propanol-based solvent.

In some embodiments, the thermochromic paint comprises: 20 to 40 wt.% of three or four metal oxides selected from aluminium oxide, cobalt oxide, iron oxide, nickel oxide, titanium oxide, and zirconium oxide; 10 to 40 wt.% of an acrylic resin; 5 to 30 wt.% a silicone resin; and 15 to 40 wt.% of a propanol-based solvent.

In some embodiments, the thermochromic paint comprises: 20 to 35 wt.% of three or four metal oxides selected from aluminium oxide, cobalt oxide, iron oxide, nickel oxide, titanium oxide, and zirconium oxide; 25 to 35 wt.% of an acrylic resin; 8 to 25 wt.% of a silicone resin; and 20 to 40 wt.% of a propanol-based solvent.

In some embodiments, the thermochromic paint comprises: 22 to 32 wt.% of three or four metal oxides selected from aluminium oxide, cobalt oxide, iron oxide, nickel oxide, titanium oxide, and zirconium oxide; 20 to 30 wt.% of an acrylic resin; 10 to 20 wt.% of a silicone resin; and 25 to 35 wt.% of a propanol-based solvent.

In some embodiments, the thermochromic paint comprises: 24 to 31 wt.% of three or four metal oxides selected from aluminium oxide, cobalt oxide, iron oxide, nickel oxide, titanium oxide, and zirconium oxide; 23 to 26 wt.% of an acrylic resin; 14 to 16 wt.% of a silicone resin; and 28 to 34 wt.% of a propanol-based solvent.

In some embodiments, the thermochromic paint consists of: 20 to 40 wt.% of three or four metal oxides selected from aluminium oxide, cobalt oxide, iron oxide, nickel oxide, titanium oxide, and zirconium oxide; 10 to 40 wt.% of an acrylic resin; 5 to 30 wt.% a silicone resin; and 15 to 40 wt.% of a propanol-based solvent.

In some embodiments, the thermochromic paint consists of: 20 to 35 wt.% of three or four metal oxides selected from aluminium oxide, cobalt oxide, iron oxide, nickel oxide, titanium oxide, and zirconium oxide; 25 to 35 wt.% of an acrylic resin; 8 to 25 wt.% of a silicone resin; and 20 to 40 wt.% of a propanol-based solvent.

In some embodiments, the thermochromic paint consists of: 22 to 32 wt.% of three or four metal oxides selected from aluminium oxide, cobalt oxide, iron oxide, nickel oxide, titanium oxide, and zirconium oxide; 20 to 30 wt.% of an acrylic resin; 10 to 20 wt.% of a silicone resin; and 25 to 35 wt.% of a propanol-based solvent.

In some embodiments, the thermochromic paint consists of: 24 to 31 wt.% of three or four metal oxides selected from aluminium oxide, cobalt oxide, iron oxide, nickel oxide, titanium oxide, and zirconium oxide; 23 to 26 wt.% of an acrylic resin; 14 to 16 wt.% of a silicone resin; and 28 to 34 wt.% of a propanol-based solvent.

**In** some embodiments, the thermochromic paint comprises: 22.5 wt.% of aluminium oxide, 5.1 wt.% of nickel oxide, 2.4 wt.% of titanium oxide, 25.2 wt.% of an acrylic resin, 15.3 wt.% of a silicone resin, and 29.5 wt.% of a propanol-based solvent; 13.1 wt.% of zirconium oxide, 3.3 wt.% of nickel oxide, 3.3 wt.% of cobalt oxide, 6.5 wt.% of aluminium oxide, 25.4 wt.% of an acrylic resin, 15.0 wt.% of a silicone resin, and 33.4 wt.% of a propanol-based solvent; 10.8 wt.% of zirconium oxide, 5.4 wt.% of nickel oxide, 13.6 wt.% of aluminium oxide, 0.6 wt.% of titanium oxide, 25.3 wt.% of an acrylic resin, 15.6 wt.% of a silicone resin, and 28.7 wt.% of a propanol-based solvent; or 2.4 wt.% of zinc oxide, 1.3 wt.% of yellow iron oxide, 26.0 wt.% of titanium oxide, 24.9 wt.% of an acrylic resin, 15.4 wt.% of a silicone resin, and 30.0 wt.% of a propanol-based solvent.

In some embodiments, the thermochromic paint consists of: 22.5 wt.% of aluminium oxide, 5.1 wt.% of nickel oxide, 2.4 wt.% of titanium oxide, 25.2 wt.% of an acrylic resin, 15.3 wt.% of a silicone resin, and 29.5 wt.% of a propanol-based solvent; 13.1 wt.% of zirconium oxide, 3.3 wt.% of nickel oxide, 3.3 wt.% of cobalt oxide, 6.5 wt.% of aluminium oxide, 25.4 wt.% of an acrylic resin, 15.0 wt.% of a silicone resin, and 33.4 wt.% of a propanol-based solvent; 10.8 wt.% of zirconium oxide, 5.4 wt.% of nickel oxide, 13.6 wt.% of aluminium oxide, 0.6 wt.% of titanium oxide, 25.3 wt.% of an acrylic resin, 15.6 wt.% of a silicone resin, and 28.7 wt.% of a propanol-based solvent; or 2.4 wt.% of zinc oxide, 1.3 wt.% of yellow iron oxide, 26.0 wt.% of titanium oxide, 24.9 wt.% of an acrylic resin, 15.4 wt.% of a silicone resin, and 30.0 wt.% of a propanol-based solvent.

The acrylic resin is an acrylic copolymer of ethylbenzene and xylene. The acrylic resin may be SYNOCRYL^{™} 9122x acrylic resin, which is commercially available.

The silicone resin may be a silanol-functional silicone resin, e.g. a silanol-functional silicone resin in toluene, which is commercially available.

The propanol-based solvent may be propanol or a solvent mixture that comprises propanol and an ether. The propanol-based solvent used in the Examples is commercially available from Banner Chemical Group, a 2M Holdings Ltd company.

Thermochromic paint of the present disclosure can be prepared by mixing the following constituents: 20 to 40 wt.% of two or more metal oxides selected from aluminium oxide, cobalt oxide, iron oxide, nickel oxide, titanium oxide, and zirconium oxide; 10 to 40 wt.% of an acrylic resin; 5 to 30 wt.% of a silicone resin; and 15 to 45 wt.% of a propanol-based solvent.

The method can involve mixing the constituents of any of the other embodiments of the thermochromic paint of the present disclosure detailed above.

The thermochromic paint can be prepared using art known equipment that is suitable for manufacturing of the paints.

In some embodiments, the method comprises mixing: 20 to 40 wt.% of three or more metal oxides selected from aluminium oxide, cobalt oxide, iron oxide, nickel oxide, titanium oxide, and zirconium oxide; 10 to 40 wt.% of an acrylic resin; 5 to 30 wt.% of a silicone resin; and 15 to 45 wt.% of a propanol-based solvent.

In some embodiments, the method comprises mixing: 20 to 40 wt.% of three or four metal oxides selected from aluminium oxide, cobalt oxide, iron oxide, nickel oxide, titanium oxide, and zirconium oxide; 10 to 40 wt.% of an acrylic resin; 5 to 30 wt.% of a silicone resin; and 15 to 45 wt.% of a propanol-based solvent.

In some embodiments, the constituents are mixed in a basket mill, the mixture of paint constituents is dispersed in a disperser, and the dispersed mixture of paint constituents is milled with ceramic beads to manufacture the thermochromic paint.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

### EXAMPLES

### Example 1

### Preparation of thermochromic paints

Thermochromic paints designated A, B, C and D were formulated from the thermochromic paint compositions that are listed in Tables 1 to 4 below.

In each case the constituents of the thermochromic paint composition were measured by mass and poured into the basket of a TML basket mill from VMA-Getzmann GmbH. The mixture of paint constituents was dispersed using a DISPERMAT^{®} disperser for a period of 5 to 10 minutes. The dispersed mixture of paint constituents was milled with yttrium-stabilised zirconium ceramic beads of 1.2 to 1.4 mm for 1 hour at 2000 rpm. After the milling the was complete, the viscosity of the resulting paint was checked using Sheen viscosity cup BS B4 against an internal quality standard to achieve a smooth spray paint application.

**TABLE 1 : Composition of A thermochromic paint**

| Thermochromic paint composition A | |
|---|---|
| Constituent | Weight % |
| Zirconium oxide | 22.5 |
| Nickel oxide | 5.1 |
| Titanium oxide | 2.4 |
| SYNOCRYL^{™} 9122x (acrylic resin) | 25.2 |
| DOWSIL^{™} RSN 0840 (silicone resin) | 15.3 |
| BANNERNOL^{™} E (propanol -based solvent) | 29.5 |

**TABLE 2 : Composition of B thermochromic paint**

| Thermochromic paint composition B | |
|---|---|
| Constituent | Weight % |
| Zirconium oxide | 13.1 |
| Nickel oxide | 3.3 |
| Cobalt oxide | 3.3 |
| Aluminium oxide | 6.5 |
| SYNOCRYL^{™} 9122x (acrylic resin) | 25.4 |
| DOWSIL^{™} RSN 0840 (silicone resin) | 15.0 |
| BANNERNOL^{™} E (propanol-based solvent) | 33.4 |

**TABLE 3 : Composition of C thermochromic paint**

| Thermochromic paint composition C | |
|---|---|
| Constituent | Weight % |
| Zirconium oxide | 10.8 |
| Nickel oxide | 5.4 |
| Aluminium oxide | 13.6 |
| Titanium oxide | 0.6 |
| SYNOCRYL^{™} 9122x (acrylic resin) | 25.3 |
| DOWSIL^{™} RSN 0840 (silicone resin) | 15.6 |
| BANNERNOL^{™} E (propanol-based solvent) | 28.7 |

**TABLE 4 : Composition of D thermochromic paint**

| Thermochromic paint composition D | |
|---|---|
| Constituent | Weight % |
| Zinc oxide | 2.4 |
| Yellow iron oxide | 1.3 |
| Titanium oxide | 26.0 |
| SYNOCRYL^{™} 9122x (acrylic resin) | 24.9 |
| DOWSIL^{™} RSN 0840 (silicone resin) | 15.4 |
| BANNERNOL^{™} E (propanol-based solvent) | 30.0 |

Aluminium oxide (ThermoFisher Scientific), cobalt oxide (ThermoFisher Scientific), nickel oxide (Alfa Aesar), titanium oxide (Mistral Industrial Chemicals) and zirconium oxide (Sigma Aldrich) were obtained in a powder form.

SYNOCRYL^{™} 9122x acrylic resin solution was obtained from Indestructible Paint Ltd.

DOWSIL^{™} RSN 0840 silicone binder resin was obtained from Dow Chemical Company. This a silanol-functional silicone resin in toluene.

BANNERNOL^{™} E propanol-based solvent was obtained from Banner Chemicals Group.

### Example 2

### Paint colours changes of thermochromic painted test pieces

Four bowtie-shaped test pieces of NIMONIC^{®} 75 80/20 nickel-chromium alloy were painted with thermochromic paints A, B, C and D respectively and allowed to dry for 1 hour and cured at 300 °C for 1 hour. The bowtie-shaped test pieces were heated by using a bespoke resistance heating machine (Bowyer Engineering Ltd), in which the narrowest point of the test pieces is the hottest part of the test pieces.

The test pieces were placed in a dark box and images of the test pieces were acquired using a Mentor Visual iQ VideoProbe^{™} borescope (ex-Waygate Technologies, of Baker Hughes Company) with a 6 mm diameter scope camera with a single white LED light source.

In each case the thermally painted test pieces showed distinct colour changes within the dark box, which was inspected by a thermochromic paint analysis specialist at Rolls-Royce plc, following the company's internal standard. Colour changes of the thermochromic paints are as follows. Generic colour names are used for simplicity. AK41: white-yellow-brown; AK43: black-grey-light blue-dark blue; AK44: white-yellow-turquoise green; AK45: pink-yellow-brown.

Each thermochromic paint was calibrated against temperature using a bespoke calibration machine (Carbolite Gero Ltd). A thermochromic paint was painted on a set of calibration coupons of NIMONIC^{®} 75 alloy, 20 x 25 x 1.6 mm in dimension, and each coupon was heated by an increment of 10 °C in the calibration furnace to obtain colour changes of the paint with respect to temperature. Temperature at which one colour changes to another was determined by a thermal paint specialist at Rolls-Royce plc.

These results show the thermochromic paint compositions A, B, C and D provided thermochromic paints that exhibited distinct colour changes when exposed to LED light provided by a borescope.

### Example 3

### Spallation testing of thermochromic paint coated turbine blades

Samples of turbine blade aerofoil sections with a thermal barrier coating (EB-PVD) were painted with thermochromic paints A, B, C and D and allowed to dry for 1 hour and cured at 300 °C for 1 hour.

Each turbine blade section underwent thermal cyclic life assessment consisting of repeated thermal exposures in an air furnace at 1190 °C followed by cooling to low temperature and hydration at the end of each 3 hour cycle. After each cycle, the samples were inspected for spallation of the TBC due to thermal stresses.

At the end of the test, the performance of the painted blade sections was found to be comparable to that of the unpainted reference blade sections.

### Example 4

### Materialographic analysis of thermochromic paint coated turbine blades following thermal exposure

Samples of turbine blade aerofoil sections with a thermal barrier coating (EB-PVD) were painted with thermochromic paints A, B, C and D and allowed to dry for 1 hour and cured at 300 °C for 1 hour.

Each sample then underwent a prolonged thermal exposure in an air furnace at 1190 °C for 16 hours before being cooled to room temperature. The samples were then encapsulated in phenolic resin and polished in preparation for materialographic analysis.

In each case, analysis by scanning electron microscopy (using a JEOL^{®} JSM-IT300 scanning electron microscope) and energy-dispersive X-ray spectroscopy (Oxford Instruments) revealed no apparent interaction of the thermochromic paints with the TBC system.

## Claims

1. A thermochromic paint (100) for a component (50), the thermochromic paint comprising:
20 to 40 wt.% of two or more metal oxides selected from aluminium oxide, cobalt oxide, iron oxide, nickel oxide, titanium oxide, and zirconium oxide;
10 to 40 wt.% of an acrylic resin;
5 to 30 wt.% of a silicone resin; and
15 to 45 wt.% of a propanol-based solvent.

2. The thermochromic paint (100) of claim 1, comprising:
20 to 35 wt.% of two or more metal oxides selected from aluminium oxide, cobalt oxide, iron oxide, nickel oxide, titanium oxide, and zirconium oxide;
25 to 35 wt.% of an acrylic resin;
8 to 25 wt.% of a silicone resin; and
20 to 40 wt.% of a propanol-based solvent.

3. The thermochromic paint (100) of claim 1 or 2, comprising:
22 to 32 wt.% of two or more metal oxides selected from aluminium oxide, cobalt oxide, iron oxide, nickel oxide, titanium oxide, and zirconium oxide;
20 to 30 wt.% of an acrylic resin;
10 to 20 wt.% of a silicone resin; and
25 to 35 wt.% of a propanol-based solvent.

4. The thermochromic paint (100) of any preceding claim, comprising:
24 to 31 wt.% of two or more metal oxides selected from aluminium oxide, cobalt oxide, iron oxide, nickel oxide, titanium oxide, and zirconium oxide;
23 to 26 wt.% of an acrylic resin;
14 to 16 wt.% of a silicone resin; and
28 to 34 wt.% of a propanol-based solvent.

5. The thermochromic paint (100) of claim 1, comprising:
20 to 40 wt.% of three or more metal oxides selected from aluminium oxide, cobalt oxide, iron oxide, nickel oxide, titanium oxide, and zirconium oxide;
10 to 40 wt.% of an acrylic resin;
5 to 30 wt.% of a silicone resin; and
15 to 45 wt.% of a propanol-based solvent.

6. The thermochromic paint (100) of claim 1, comprising:
20 to 40 wt.% of three or four metal oxides selected from aluminium oxide, cobalt oxide, iron oxide, nickel oxide, titanium oxide, and zirconium oxide;
10 to 40 wt.% of an acrylic resin;
5 to 30 wt.% of a silicone resin; and
15 to 45 wt.% of a propanol-based solvent.

7. The thermochromic paint (100) of any preceding claim, comprising:
22.5 wt.% of aluminium oxide, 5.1 wt.% of nickel oxide, 2.4 wt.% of titanium oxide, 25.2 wt.% of an acrylic resin, 15.3 wt.% of a silicone resin, and 29.5 wt.% of a propanol-based solvent;
13.1 wt.% of zirconium oxide, 3.3 wt.% of nickel oxide, 3.3 wt.% of cobalt oxide, 6.5 wt.% of aluminium oxide, 25.4 wt.% of an acrylic resin, 15.0 wt.% of a silicone resin, and 33.4 wt.% of a propanol-based solvent;
10.8 wt.% of zirconium oxide, 5.4 wt.% of nickel oxide, 13.6 wt.% of aluminium oxide, 0.6 wt.% of titanium oxide, 25.3 wt.% of an acrylic resin, 15.6 wt.% of a silicone resin, and 28.7 wt.% of a propanol-based solvent; or
2.4 wt.% of zinc oxide, 1.3 wt.% of yellow iron oxide, 26.0 wt.% of titanium oxide, 24.9 wt.% of an acrylic resin, 15.4 wt.% of a silicone resin, and 30.0 wt.% of a propanol-based solvent.

8. The thermochromic paint (100) of any preceding claim, wherein the acrylic resin is a copolymer of ethylbenzene and xylene.

9. The thermochromic paint (100) of any preceding claim, wherein the silicone resin is a silanol-functional silicone resin.

10. The thermochromic paint (100) of any preceding claim, wherein the propanol-based solvent is propanol or a mixture that comprises propanol and ether.

11. A method (200) for preparing a thermochromic paint (100), the method comprises mixing the following constituents: 20 to 40 wt.% of two or more metal oxides selected from aluminium oxide, cobalt oxide, iron oxide, nickel oxide, titanium oxide, and zirconium oxide; 10 to 40 wt.% of an acrylic resin; 5 to 30 wt.% of a silicone resin; and 15 to 45 wt.% of a propanol-based solvent.

12. The method (200) of claim 11, wherein the constituents are mixed in a basket mill; the mixture of paint constituents is dispersed in a disperser; and the dispersed mixture of paint constituents is milled with ceramic beads to form the thermochromic paint (100).

13. A component (50) that is at least partially coated with a thermochromic paint (100) of any one of claims 1 to 10.

14. The component (50) of claim 13 that is a gas turbine engine component.
